(19) Europäisches Patentamt
European Patent Office
Office européen des brevets

(11) **EP 2 702 460 B1**

(12) **EUROPÄISCHE PATENTSCHRIFT**

(45) Veröffentlichungstag und Bekanntmachung des Hinweises auf die Patenterteilung:
**11.02.2015  Patentblatt 2015/07**

(21) Anmeldenummer: **12708671.8**

(22) Anmeldetag: **28.02.2012**

(51) Int Cl.:
*F16K 31/06* (2006.01)     *G05D 16/20* (2006.01)

(86) Internationale Anmeldenummer:
**PCT/EP2012/000843**

(87) Internationale Veröffentlichungsnummer:
**WO 2012/146332 (01.11.2012 Gazette 2012/44)**

(54) **PNEUMATISCHES VENTIL UND SEINE VERWENDUNG FÜR EINEN ANGESCHLOSSENEN VERBRAUCHER**

PNEUMATIC VALVE AND USE THEREOF FOR A CONNECTED CONSUMER

VANNE PNEUMATIQUE ET SON USAGE POUR UN CONSOMMATEUR CONNECTÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2011  DE 102011018873**

(43) Veröffentlichungstag der Anmeldung:
**05.03.2014  Patentblatt 2014/10**

(73) Patentinhaber: **Hydac Electronic GmbH**
**66128 Saarbrücken (DE)**

(72) Erfinder:
• **GROH, Christian**
**66453 Gersheim (DE)**
• **REMUS, Kai**
**66564 Ottweiler (DE)**

(74) Vertreter: **Bartels, Martin Erich Arthur**
**Patentanwälte**
**Bartels und Partner**
**Lange Strasse 51**
**70174 Stuttgart (DE)**

(56) Entgegenhaltungen:
**EP-A2- 0 357 964     DE-A1- 2 222 447**
**DE-A1- 3 124 904     DE-A1- 3 328 418**
**DE-A1- 10 025 772**

EP 2 702 460 B1

**Beschreibung**

Die Erfindung betrifft ein pneumatisches Ventil, insbesondere pneumatisches Proportionaldruck-Regelventil, mit den Merkmalen im Oberbegriff von Anspruch 1.

Pneumatische Fluide führende Systeme weisen zur Überwachung und Steuerung ihres Druckes verschiedene Ventile auf. Beispielsweise werden zum Einstellen des Druckes in einem pneumatischen System oder in Teilen eines derartigen Systems Ventile eingesetzt, die den Druck auf ihrer Druckeingangs- oder Druckausgangsseite regeln oder reduzieren. In solchen pneumatischen Systemen werden zur Begrenzung des Druckes Überdruckventile eingesetzt, die auch eine fluidführende Verbindung von einer Druckleitung zu einem Druckspeicher aufweisen können. Ein derartiges pneumatisches Ventil weist üblicherweise ein Ventilgehäuse auf, das zumindest einen ersten Medienanschluss und einen zweiten Medienanschluss umfasst, die regelmäßig eine Medieneintrittsöffnung und eine Medienaustrittsöffnung bilden. Häufig ist in den Ventilgehäusen eines pneumatischen Ventils ein kolbenartiges Ventilelement axial in einer Führung verfahrbar geführt. Durch ein axiales Bewegen des kolbenartigen Ventilelements kann beispielsweise ein Durchflussquerschnitt zwischen dem ersten Medienanschluss und dem zweiten Medienanschluss verändert werden. Das kolbenartige Ventilelement wird hierbei bevorzugt durch eine Betätigungseinrichtung in die eine und durch eine Rückstelleinrichtung in die andere Richtung bewegt. Auf diese Weise kann beispielsweise der Druck an dem einen oder anderen Medienanschluss geregelt oder reduziert werden.

Die DE 10 2009 010 339 A1 beschreibt ein Proportionalregelventil für pneumatische Anwendungen, umfassend ein piezoelektrisch ansteuerbares Ventilelement, einen Sensor zur Messung eines Istwertes einer Regelgröße, eine elektrische Schnittstelle zum Empfang eines den Sollwert für die Regelgröße repräsentierenden Sollsignals sowie eine Regelelektronik. Die elektrische Schnittstelle ist eine 2-Leiter-Schnittstelle zum Empfang eines pulsweitenmodulierten, digitalen Sollsignals, wobei das Proportionalregelventil zudem dazu eingerichtet ist, die gesamte elektrische Energie zum Betrieb des Proportionalregelventils aus dem digitalen Sollsignal zu gewinnen.

Die bekannten pneumatischen Ventile weisen insoweit also elektronisch angesteuerte Betätigungseinrichtungen auf, die vorzugsweise nach Maßgabe von Sensorsignalen einer oder mehrerer ventilinterner Drucksensoren angesteuert sind. Die bekannten pneumatischen Ventile, insbesondere Proportional-Regelventile sind daher aufwendig im Aufbau, was mit entsprechend hohen Herstellungs- und Montagekosten einhergeht. Auch erweist sich insbesondere in einem "harten Betrieb" die Regelelektronik häufig als störanfällig.

Die DE 33 28 418 A1 beschreibt ein pneumatisches Ventil, insbesondere ein pneumatisches Proportionaldruck-Regelventil, mit einem Ventilgehäuse, in dem ein kolbenartiges Ventilelement axial verfahrbar in einer Führung geführt ist und unter der Wirkung einer Betätigungseinrichtung für das Ventilelement und einer eine Federkraft ausübenden Rückstelleinrichtung, die auf das Ventilelement entgegen der aufgebrachten Magnetkraft der Betätigungseinrichtung wirkt, einen Medienfluss zumindest zwischen zumindest einem ersten Medienanschluss und einem zweiten Medienanschluss an dem Ventilgehäuse regelt, wobei mit dem Ansteuern der Betätigungseinrichtung das Ventilelement eine medienführende Verbindung zwischen den jeweiligen Medienanschlüssen unter Berücksichtigung der vorherrschenden Kräfte, auf der Basis der anstehenden Drücke multipliziert mit den jeweils druckwirksamen Flächen, der Federkraft, den Strömungskräften und der Magnetkraft, herstellt.

Ausgehend von diesem Stand der Technik liegt der Erfindung die Aufgabe zugrunde, ein pneumatisches Ventil anzugeben, das konstruktiv einfach aufgebaut und kostengünstig herstellbar sowie funktionssicher im Betrieb ist. Der Erfindung liegt ferner die Aufgabe zugrunde, mit Hilfe des pneumatischen Ventils eine Druckregelung eines pneumatischen Mediums für einen an ein oder mehrere dieser Ventile angeschlossenen Verbraucher anzugeben.

Diese Aufgaben sind durch das in Anspruch 1 bestimmte pneumatische Ventil und durch eine Verwendung von zumindest zwei erfindungsgemäßen Ventilen gemäß dem nebengeordneten Anspruch 9 gelöst.

Das Ventil ist erfindungsgemäß dadurch gekennzeichnet, dass der Ventilkolben des Ventilelementes mit einem Laufspiel in der Führung des Ventilgehäuses geführt ist, um dergestalt einen Druckausgleich zwischen den beiden Medienanschlüssen und dem Ankerraum herzustellen, oder dass bei dicht gestalteter Führung des Ventilkolbens im Ventilgehäuse der Ankerraum unter druckdichter Ausbildung gegenüber der Umgebung im Bereich des Umgebungsdruckes gehalten ist, oder dass bei dicht geführtem Ventilkolben im Ventilgehäuse über mindestens einen Entlüftungskanal der Ankerraum auf Umgebungsdruck entlastet ist.

Durch diese konstruktive Maßnahmen lässt sich die Rückstelleinrichtung besonders klein dimensionieren, da der Ventilkolben insgesamt druckentlastet ist.

Ferner ist vorgesehen, dass mit dem Ansteuern der Betätigungseinrichtung das Ventilelement eine medienführende Verbindung zwischen den jeweiligen Medienanschlüssen unter Berücksichtigung der vorherrschenden Kräfte, auf der Basis der anstehenden Drücke multipliziert mit den jeweils druckwirksamen Flächen, der Federkraft, den Strömungskräften und der Magnetkraft, herstellt. Bei einer Änderung des Mediendruckes an zumindest einem der Medienanschlüsse kann das Ventilelement entweder in Schließrichtung oder in eine Position bewegt werden, in der ein Öffnungsquerschnitt des von dem Ventilelement gesteuerten Medienanschlusses vergrößert wird.

In einer besonders bevorzugten Ausführungsform des pneumatischen Ventils ist bei einer Anwendung des pneumatischen Ventils als Druckminderventil, sofern bei einem Medienanschluss ein höherer Druck gegenüber einem niedrigeren Druck im jeweils anderen Medienanschluss ansteht, der niedrigere Druck geregelt. Bei einer Regelung des jeweils höheren Druckes kann vorzugsweise mit ein und derselben Ventilkonstruktion die Funktion eines Druckbegrenzungsventils wahrgenommen werden. Damit ist eine konstruktive Maßnahme angegeben, in ein und demselben pneumatischen Ventil zwei Funktionen - Druckminderventil und Druckbegrenzungsventil - je nach Verschaltung und Anschlussbelegung zu vereinen.

Bei einem Betrieb des erfindungsgemäßen pneumatischen Ventils ohne eine Ansteuerung der Betätigungseinrichtung ist das Ventilelement mit der von der Rückstelleinrichtung aufgebrachten Magnetkraft in Richtung seiner Schließstellung nach folgender Kräfteformel gehalten:

$$p_1 \times A_1 - p_2 \times A_2 + p_2 \times A_3 - p_2 \times A_4 + F_0 = 0.$$

Dabei sei unter $p_1$ ein Mediendruck am ersten Medienanschluss, $p_2$ ein Mediendruck am zweiten Medienanschluss, sowie $A_1$ bis $A_4$ einzelne druckwirksame Flächen an dem kolbenartigen Ventilelement und unter $F_0$ eine Federkraft der Rückstelleinrichtung auf das Ventilelement verstanden. Die angegebene Formel gibt die Verhältnisse unter Vernachlässigung der Reibung wieder. Ein jeweils an zumindest einem der Medienanschlüsse anstehender Mediendruck $p_1$, $p_2$ multipliziert mit einer druckwirksamen Fläche $A_1$, $A_2$, $A_3$, $A_4$ des Ventilelements ist vorzugsweise im Gleichgewicht mit der herrschenden Betätigungskraft $F_B$ der Betätigungs- oder Magnetkraft.

Das Ventilelement ist vorzugsweise aus einem in der Führung des Ventilgehäuses geführten Ventilkolben mit einem verdickten Querschnitt gebildet, wobei der Ventilkolben an seiner einen freien Stirnseite einen im Querschnitt verbreiterten Ventilteller aufweist, der unter Durchgriff des ersten Medienanschlusses aus dem Ventilgehäuse vorsteht und der über eine Ventilstange mit dem Ventilkolben verbunden ist, wobei das Ventil stromlos geschlossen ist. Somit sind in dem Ventilelement ein Ventilkolben und ein Ventilteller zusammengefasst. Durch diese konstruktive Maßnahme verringert sich der Montageaufwand des erfindungsgemäßen pneumatischen Ventils. Der Ventilteller wiederum weist auf seinen beiden gegenüberliegenden Stirnseiten jeweils eine druckwirksame Fläche auf, die im Bereich des ersten Medienanschlusses angeordnet ist. Auch diese konstruktive Maßnahme stellt eine Mehrfachnutzung eines Bauelements, hier in Form des Ventilelements des pneumatischen Ventils dar.

In einem besonders bevorzugten Ausführungsbeispiel des pneumatischen Ventils ist eine dem zweiten Medienanschluss zugewandte Stirnseite des Ventilkolbens als druckwirksame Fläche gebildet, die gleich groß ist wie die druckwirksame Fläche an dem Ventilteller. Auf der anderen Stirnseite des Ventilkolbens ist eine weitere druckwirksame Fläche ausgebildet, die vorzugsweise größer als jede der genannten einzelnen druckwirksamen Flächen ist. Diese konstruktive Maßnahme kann die für die Betätigung des Ventilelements erforderliche Kraft der Betätigungseinrichtung und damit die Baugröße der Betätigungseinrichtung reduzieren.

Bevorzugt ist die Betätigungseinrichtung aus einem Betätigungsmagneten gebildet, mit einem Magnetanker, der in einem Ankerraum, vorzugsweise innerhalb eines Polrohres, längsverfahrbar geführt ist und der über eine bestrombare Spuleneinrichtung angesteuert ist. Der Magnetanker kann entgegen der Rückstellkraft oder Federkraft vorzugsweise mindestens einer Druckfeder der Rückstelleinrichtung das Ventilelement aus der Schließstellung heraus in eine geöffnete Stellung bewegen.

Zumindest zwei der erfindungsgemäßen pneumatischen Ventile lassen sich vorteilhaft zur Druckregelung eines pneumatischen Mediums für einen an die betreffenden Ventile jeweils angeschlossenen Verbraucher versenden. Hierbei wird vorteilhaft ein Ventil als Druckminderventil und das andere Ventil als Druckbegrenzungsventil verwendet bzw. ausgebildet. Der Verbraucher kann beispielsweise ein pneumatischer Arbeitszylinder sein, dessen in einem Zylindergehäuse befindliche Medienräume in bekannter Weise über eine Kolbenstangeneinheit voneinander getrennt sind. An einem der beiden Medienräume des Arbeitszylinders ist hierbei sowohl das Druckminderventil als auch das Druckbegrenzungsventil - vorzugsweise in Baugleichheit mit dem Druckminderventil - angeschlossen.

Das pneumatische Ventil vereint somit bei einer einzigen Bauform zumindest zwei verschiedene Funktionen - Druckminderventil und Druckbegrenzungsventil. Es kommt ohne elektronische Regelungseinrichtungen, wie Drucksensoren, und deren Signale verarbeitende CPU (Prozessor) aus. Das erfindungsgemäße pneumatische Ventil ist somit sehr einfach und kompakt aufgebaut und ist für die Durchführung verschiedener Steuerfunktionen einer pneumatischen Anlage geeignet. Durch Verzicht auf eine komplizierte Regelelektronik, wie im Stand der Technik aufgezeigt, ist ein besonders funktionssicherer Betrieb erreicht, auch wenn das Ventil einem "harten Betrieb" ausgesetzt ist.

Nachstehend ist die Erfindung anhand eines in der Zeichnung dargestellten Ausführungsbeispiels im Einzelnen erläutert. Es zeigen:

Fig. 1    einen schematischen, nicht maßstäblichen Längsschnitt eines ersten Ausführungsbeispiels eines pneumatischen Ventils in der Funktion als Druckminderventil (DMV);

Fig. 2      einen weiteren schematischen, nicht maßstäblichen Längsschnitt durch ein pneumatisches Ventil in einer Funktion als Druckbegrenzungsventil (DBV);

Fig. 3      einen weiteren schematischen, nicht maßstäblichen Längsschnitt durch ein weiteres Ausführungsbeispiel eines pneumatischen Ventils; und

Fig. 4      eine schematische Funktionsdarstellung einer Verwendung von zwei pneumatischen Ventilen zur Druckregelung eines pneumatischen Mediums an einem als Arbeitszylinder gebildeten Verbraucher:

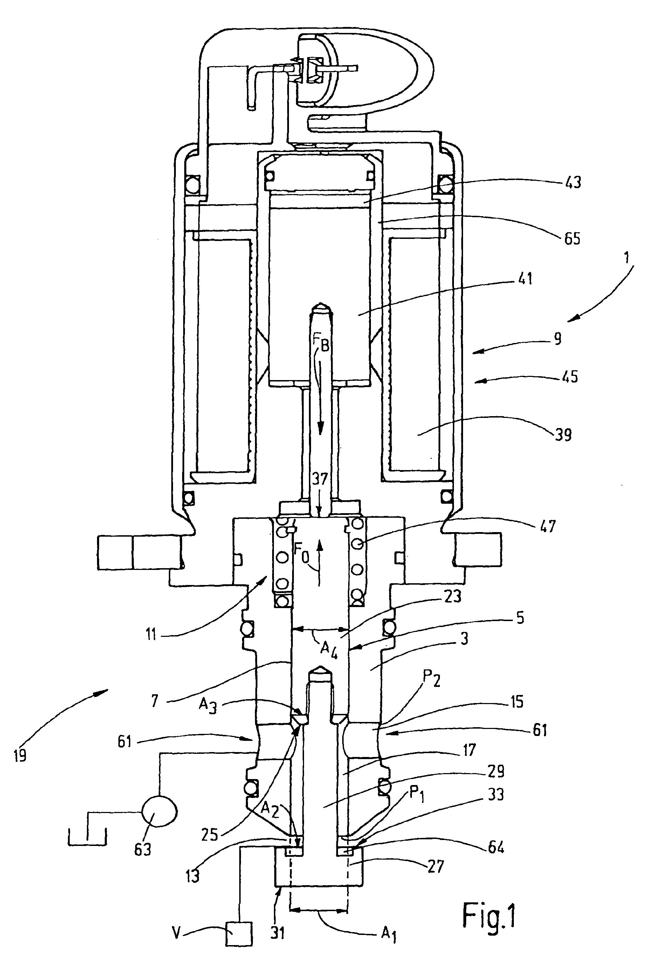

In Fig. 1 ist in einem schematischen, nicht maßstäblichen Längsschnitt ein pneumatisches Ventil 1, das in dem gezeigten Ausführungsbeispiel als pneumatisches Proportionaldruck-Regelventil ausgebildet ist, dargestellt. Das pneumatische Ventil 1 weist ein in seiner Gestalt zylinderartiges Ventilgehäuse 3 auf. In dem Ventilgehäuse 3 ist ein kolbenartiges Ventilelement 5 axial verfahrbar in einer Führung 7 geführt. Die Führung 7 ist in dem gezeigten Ausführungsbeispiel in der Art einer Ventilbohrung ausgeführt. Darin wird das kolbenartige Ventilelement 5 unter der Wirkung einer Betätigungseinrichtung 9 und einer Rückstelleinrichtung 11, die auf das Ventilelement 5 mit einer Kraft Fo entgegen der aufgebrachten Kraft $F_B$ der Betätigungseinrichtung 9 wirkt, in die eine oder andere Richtung axial verfahren, wobei die gesamten druckwirksamen Flächen derart in die Betrachtung mit einzubeziehen sind, dass jedenfalls ein Propörtional-Druckregelventil und kein Proportionaldrosselventil realisiert ist. Dabei steuert das kolbenartige Ventilelement 5 einen Medienfluss zwischen einem ersten Medienanschluss 13 und einem zweiten Medienanschluss 15 an dem Ventilgehäuse 3. In den gezeigten Ausführungsbeispielen in den Fig. 1 bis 4 steuern die dahingehenden Ventile 1 einen Medienfluss in Form von Druckluft.

Der erste Medienanschluss 13 ist in dem gezeigten Ausführungsbeispiel zentral an einem axialen Ende des Ventilgehäuses 3, eine kreisrunde Öffnung bildend, angeordnet. Mit einem Ansteuern der Betätigungseinrichtung 9, die in allen gezeigten Ausführungsbeispielen als bestrombare Spuleneinrichtung 45 gebildet ist, stellt das Ventilelement 5 eine medienführende Verbindung 17 zwischen dem ersten Medienanschluss 13 und dem zweiten Medienanschluss 15 her. Dabei stellt sich ein Gleichgewicht zwischen der herrschenden Betätigungskraft $F_B$ der Betätigungseinrichtung 9 und den Kräften am Ventilelement 5 ein, dahingehend, dass die jeweils an den Medienanschlüssen 13, 15 anstehenden Mediendrücke $p_1$, $p_2$ multipliziert mit den jeweiligen druckwirksamen Flächen $A_1$ bis $A_4$, der Federkraft und den Strömungskräften im Gleichgewicht mit der jeweiligen Betätigungskraft $F_B$ sind. Eine weitere Erläuterung der dahingehenden Gleichgewichtssituation an den gezeigten Ausführungsbeispielen der pneumatischen Ventile 1 wird nachfolgend noch angegeben.

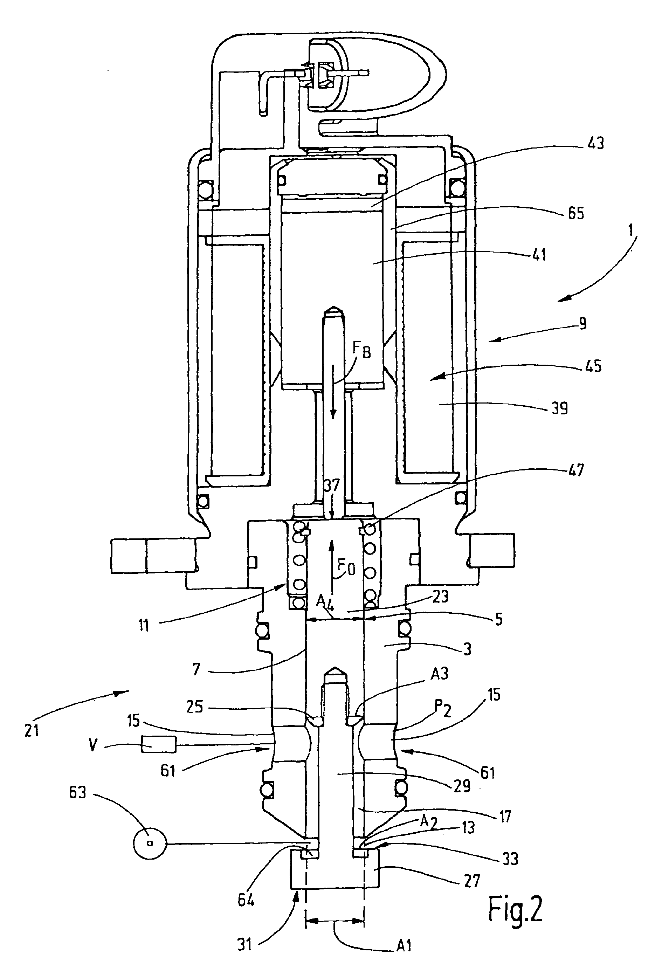

Das pneumatische Ventil 1 kann als Druckminderventil 19 (vgl). Fig. 1) oder als Druckbegrenzungsventil 21 (vgl. Fig. 2) eingesetzt sein. In Fig. 1 ist demgemäß an dem zweiten Medienanschluss 15, der durch radial zu der Führung 7 in dem Ventilgehäuse 3 verlaufende, sich diametral gegenüberliegende Bohrungen 61 gebildet ist, eine Druckquelle 63 mit beispielsweise konstant hohem Druck angeschlossen. Insbesondere kann an der Stelle 63 Umgebungsdruck herrschen. An dem ersten Medienanschluss 13 ist ein Verbraucher V angeschlossen. Das pneumatische Ventil 1 regelt hierbei den im Allgemeinen niedrigeren Druck an dem ersten Medienanschluss 13.

Bei dem als Druckbegrenzungsventil 21 in Fig. 2 dargestellten pneumatischen Ventil 1 ist die Druckquelle 63 hingegen an dem ersten Medienanschluss 13 angeschlossen, und ein Verbraucher V an dem zweiten Medienanschluss 15 angeschlossen. Das Ventilelement 5 begrenzt hierbei den an dem zweiten Medienanschluss 15 anstehenden Druck für den Verbraucher V. Im Übrigen gelten für gleiche Bauteile dieselben Bezugszeichen wie in Fig. 1.

Bei einem Betrieb des pneumatischen Ventils 1 ohne Ansteuerung der Betätigungseinrichtung 9 ist das Ventilelement 5 durch die von der Rückstelleinrichtung 11 aufgebrachten Kraft $F_o$ in Richtung seiner Schließstellung gehalten. Dabei ist ein Kräftegleichgewicht wie folgt vorhanden:

$$p_1 \times A_1 - p_2 \times A_2 + p_2 \times A_3 - p_2 \times A_4 + F_0 = 0$$

Mit $p_1$ ist hier der Druck am ersten Medienanschluss 13, mit $p_2$ der Druck am zweiten Medienanschluss 15 definiert. Die Definition der druckwirksamen Flächen $A_1$ bis $A_4$ an dem kolbenartigen Ventilelement 5 ergibt sich im Folgenden. Das Ventilelement 5 ist aus einem in der Führung 7 des Ventilgehäuses 3 geführten Ventilkolben 23 und einem mit diesem verbundenen Ventilteller 27 gebildet. Der Ventilkolben 23 ist zylinderförmig gebildet und mit einem verdickten Querschnitt versehen, und weist eine freie Stirnseite 25 auf, an der der im Querschnitt weiter verbreitete Ventilteller 27 unter Durchgriff des ersten Medienanschlusses 13 festgelegt ist und aus dem Ventilgehäuse 3 vorsteht. Der Ventilteller 27 ist über eine Ventilstange 29.mit dem Ventilkolben 23 verbunden. In dem in Fig. 1 und 2 gezeigten Ausführungsbeispiel erfolgt die Verbindung der Ventilstange 29 mit dem Ventilkolben 23 durch eine Schraubverbindung.

Die druckwirksame Fläche $A_1$ ist eine Teilfläche der Gesamtgrundfläche des Ventiltellers 27, und ist auf einer Stirnseite 31 des Ventiltellers 27, welche dem Ventilgehäuse 3 abgewandt ist, angeordnet. Auf seiner der Stirnseite 31 gegenüberliegenden Stirnseite 33 ist die druckwirksame Fläche $A_2$ gebildet. Die druckwirksame Fläche $A_1$ ist identisch mit der Fläche $A_4$; sie entspricht dem Durchmesser der Ventilgehäusebohrung im Bereich des Medienanschlusses 13 und die Fläche $A_2$ entspricht der Fläche $A_1$ abzüglich des Durchmessers der Ventilstange 29. Die Figuren stellen einen jeweils nicht ausgeregelten Zustand dar. Im ausgeregelten Zustand oder auch im unbestromten Zustand ist das Ventil geschlossen.

An seiner dem zweiten Medienanschluss 15 zugewandten Stirnseite 25 weist der Ventilkolben 23 eine weitere druckwirksame Fläche $A_3$ auf. Die druckwirksame Fläche $A_3$ ist gleich groß wie die druckwirksame Fläche $A_2$ am Ventilteller 27. Auf seiner der Stirnseite 25 gegenüberliegenden Stirnseite 37 weist der Ventilkolben 23 eine vierte druckwirksame Fläche $A_4$ auf, die größer als jede der druckwirksamen Flächen $A_1$ bis $A_3$ ist und die dem Durchmesser des Ventilkolbens 23 entspricht. Ferner ist die Fläche $A_4$ gleich groß wie die Fläche $A_1$. Um die Ventilstange 29 ist ein als Weichdichtung gebildetes Dichtelement 64 gelegt und an der Stirnseite 33 konturbündig in den Ventilteller 27 eingelassen.

Wie bei allen Ausführungsbeispielen in den Fig. 1 bis 3 gezeigt, ist die Betätigungseinrichtung 9 aus einem Betätigungsmagneten 39 gebildet und weist einen Magnetanker 41 auf, der in einem Ankerraum 43 längsverfahrbar geführt ist. Der Ankerraum 43 ist durch ein dünnwandiges Polrohr 65 radial begrenzt. Eine bestrombare Spuleneinrichtung 45 bildet den Betätigungsmagneten 39 und wirkt auf den Magnetanker 41 bei deren Bestromung entgegen der Rückstellkraft Fo der als Schraubendruckfeder 47 gebildeten Rückstelleinrichtung 11 auf das Ventilelement 5. Das Ventilelement 5 wird dabei aus seiner Schließstellung, in der das Dichtelement 63 den ersten Medienanschluss 13 dichtend verschließt, in eine in Fig. 1 gezeigte geöffnete Stellung bewegt. An dieser Stelle sei auf weitere Details der Betätigungseinrichtung 9 verzichtet, da diese insbesondere durch zahlreiche Voranmeldungen der Anmelderin hinreichend bereits bekannt ist.

Der Ventilkolben 23 des Ventilelementes 5 ist in der Führung 7 des Ventilgehäuses 3 mit einem Laufspiel so geführt, dass ein Druckausgleich zwischen dem Medienanschluss 15 und dem Ankerraum 43 erfolgt. Es kann auch vorteilhaft sein, die Führung 7 mittels einer Ringdichtung 49 dicht zu gestalten, so dass der Ankerraum 43 in dem Ventilgehäuse 3 gegenüber Anschluss 15 und im Bereich des Umgebungsdruckes gehalten und druckdicht ist. Ferner kann es vorteilhaft sein, in dem Ventilgehäuse 3 oder dem Ventilkolben 23 einen Entlüftungskanal (nicht dargestellt) vorzusehen, der den Ankerraum 43 mit seiner Umgebung, vorzugsweise mit dem Umgebungsdruck verbindet.

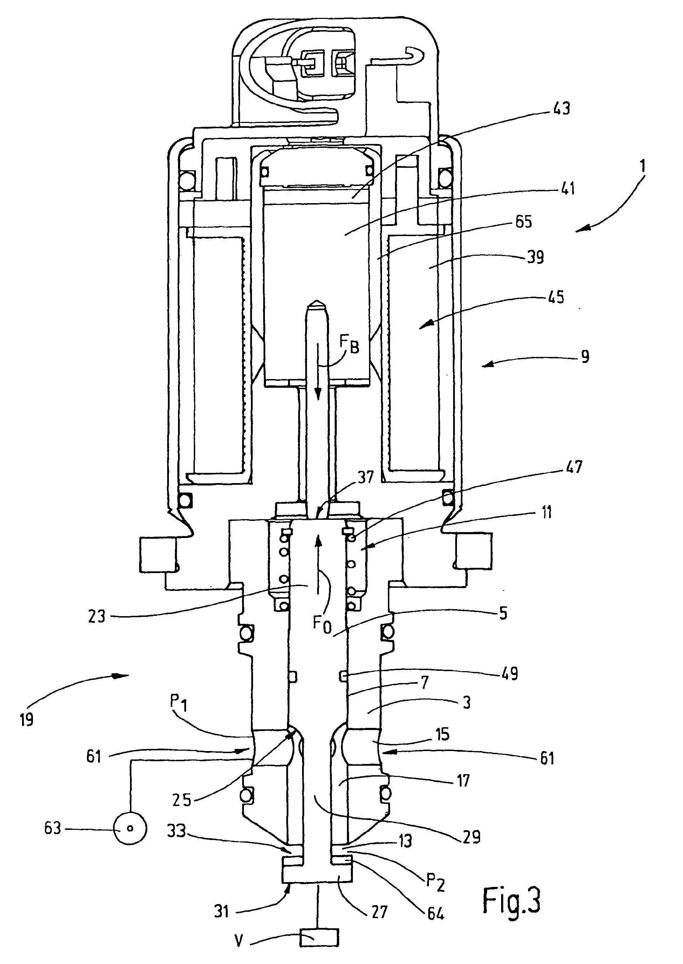

Fig. 3 verdeutlicht, dass bei einer Anbindung des Ankerraums 43 an den Umgebungsdruck und einem drucklos in der Führung 7 gehaltenen Ventilelement 5 die Rückstelleinrichtung 11 und insbesondere die Druckfeder 47 eine geringere Rückstellkraft $F_o$ aufzubringen haben und entsprechend kleiner dimensionierbar sind. Eine dahingehende Ventileinrichtung kann auch sehr schnelle Schalt- und Regelvorgänge ausführen.

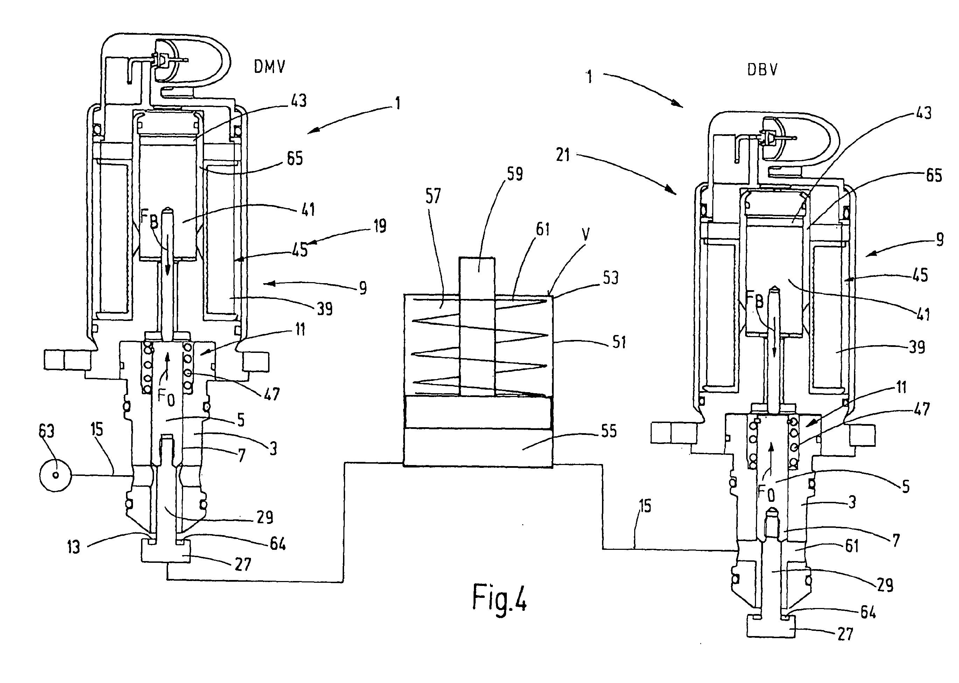

Die Fig. 4 zeigt beispielhaft in einer schematischen Funktionsdarstellung ein Anwendungsbeispiel für das erfindungsgemäße pneumatische Ventil 1, das baugleich einmal in der Funktion als Druckminderventil 19 und einmal in der Funktion als Druckbegrenzungsventil 21 zur Druckregelung eines pneumatischen Mediums bei einem Verbraucher V an diesen jeweils medienführend angeschlossen ist. Der Verbraucher V besteht aus einem pneumatischen Arbeitszylinder 51, dessen beide, in einem Zylindergehäuse 53 befindlichen Medienräume 55, 57 über eine Kolbenstangeneinheit 59 voneinander getrennt sind, wobei das in die Blickrichtung auf die Fig. 4 links dargestellte Druckminderventil 19 ebenso fluidführend an den kolbenseitigen Medienraum 55 angeschlossen ist wie das rechts dargestellte Druckbegrenzungsventil 21. Als weitere Rückstelleinrichtung ist in dem stangenseitigen Medienraum 57 wie dargestellt eine mechanische Feder 61 eingebracht, wobei zusätzlich oder alternativ an die Stelle der mechanischen Rückstellfeder eine Gasfeder oder dergleichen treten kann. Damit lässt sich auf sehr kostengünstige Weise und funktionssicher mit nur einer Bauart an pneumatischen Ventilen 1 eine Druckregelung für einen hydraulischen Verbraucher V realisieren. Der Arbeitszylinder V könnte auch aus einem Balgzylinder (nicht dargestellt) bestehen.

## Patentansprüche

1. Pneumatisches Ventil, insbesondere pneumatisches Proportionaldruck-Regelventil, mit einem Ventilgehäuse (3), in dem ein kolbenartiges Ventitetement (5) axial verfahrbar in einer Führung (7) geführt ist und unter der Wirkung einer Betätigungseinrichtung (9) für das Ventilelement (5) und einer eine Federkraft ausübenden Rückstelleinrichtung (11), die auf das Ventilelement (5) entgegen der aufgebrachten Magnetkraft ($F_B$) der Betätigungseinrichtung (9) wirkt, einen Medienfluss zumindest zwischen zumindest einem ersten Medienanschluss (13) und einem zweiten Medienanschluss (15) an dem Ventilgehäuse (3) regelt, wobei mit dem Ansteuern der Betätigungseinrichtung (9) das Ventilelement (5) eine medienführende Verbindung (17) zwischen den jeweiligen Medienanschlüssen (13,15) unter Berücksichtigung der vorherrschenden Kräfte, auf der Basis der anstehenden Drücke multipliziert mit den jeweils druckwirksamen Flächen, der Federkraft, den Strömungskräften und der Magnetkraft, herstellt, **dadurch gekennzeichnet, dass** der Ventilkolben (23) des Ventilelementes (5) mit einem Laufspiel in der Führung (7) des Ventilgehäuses (3) geführt ist, um dergestalt einen Druckausgleich zwischen den beiden Medienanschlüssen (13, 15) und dem Ankerraum (43) herzustellen, oder dass bei dicht gestalteter Führung (7) des Ventilkolbens (23) im Ventilgehäuse (3) der Ankerraum (43) unter druckdichter Ausbildung gegenüber der Umgebung im Bereich des Umgebungsdruckes gehalten ist, oder dass bei dicht geführtem Ventilkolben (23) im Ventilgehäuse (3) über mindestens einen Entlüftungskanal (49) der Ankerraum (43) auf Umgebungsdruck entlastet ist.

2. Ventil nach Anspruch 1, **dadurch gekennzeichnet, dass**, sofern bei einem Medienanschluss (13,15) ein höherer Druck gegenüber einem niedrigeren Druck im jeweils anderen Medienanschluss (13,15) ansteht, unter Realisierung eines Druckminderventils (19) der niedrigere Druck geregelt wird und dass bei einer Regelung des jeweils höheren Druckes die Funktion eines Druckbegrenzungsventils (21), vorzugsweise mit ein- und derselben Ventilkonstruktion, erreicht ist.

3. Ventil nach Anspruch 1 oder 2, **dadurch gekennzeichnet, dass** bei Betrieb des Ventils (1) ohne Ansteuern der Betätigungseinrichtung (9) das Ventilelement (5) mit der von der Rückstelleinrichtung (11) aufgebrachten Federkraft ($F_o$) in Richtung seiner Schließstellung nach folgender Kräfteformel

$$p_1 \times A_1 - p_2 \times A_2 + p_2 \times A_3 - p_2 \times A_4 + F_o = 0$$

unter Vernachlässigung der Reibung gehalten ist, mit

$p_1$ Druck am ersten Medienanschluss (13),
$p_2$ Druck am zweiten Medienanschluss (15),
$A_1$ bis $A_4$ einzelne druckwirksame Flächen am kolbenartigen Ventilelement (5) und
$F_o$ Federkraft der Rückstelleinrichtung (11) auf das Ventilelement (5).

4. Ventil nach einem der vorhergehenden Ansprüche, **dadurch gekennzeichnet, dass** das Ventilelement (5) aus einem in der Führung (7) des Ventilgehäuses (3) geführten Ventilkolben (23) mit verdicktem Querschnitt gebildet ist, der an seiner einen freien Stirnseite (25) einen demgegenüber im Querschnitt verbreiterten Ventilteller (27) aufweist, der unter Durchgriff des ersten Medienanschlusses (13) aus dem Ventilgehäuse (3) vorsteht und der über eine Ventilstange (29) mit dem Ventilkolben (23) verbunden ist und dass das Ventil stromlos geschlossen ist.

5. Ventil nach einem der vorhergehenden Ansprüche, **dadurch gekennzeichnet, dass** der Ventilteller (27) auf seinen beiden gegenüberliegenden Stirnseiten (31, 33) jeweils eine druckwirksame Fläche (A1 und A2) aufweist, die im Bereich des ersten Medienanschlusses (13) angeordnet sind.

6. Ventil nach einem der vorhergehenden Ansprüche, **dadurch gekennzeichnet, dass** der Ventilkölben (23) an seiner dem zweiten Medienanschluss (15) zugewandten Stirnseite (35) eine druckwirksame Fläche ($A_3$) aufweist, die gleich groß ist wie die druckwirksame Fläche ($A_2$) am Ventilteller (27) und dass der Ventilkolben (23) auf seiner anderen Stirnseite (37) eine weitere druckwirksame Fläche (A4) ausbildet.

7. Ventil nach einem der vorhergehenden Ansprüche, **dadurch gekennzeichnet, dass** die Betätigungseinrichtung (9) aus einem Betätigungsmagneten (35) gebildet ist mit einem Magnetanker (41), der in einem Ankerraum (43) längsverfahrbar geführt ist und der über eine bestrombare Spuleneinrichtung (45) angesteuert, entgegen der Federkraft (Fo) mindestens einer Druckfeder (47) der Rückstelleinrichtung (11) das Ventilelement (5) aus der Schließstellung heraus in eine geöffnete Stellung bewegt.

8. Verwendung von zumindest zwei Ventilen, jeweils ausgebildet nach einem der vorhergehenden Ansprüche zur Druckregelung eines pneumatischen Mediums für einen an die Ventile (1) jeweils angeschlossenen Verbraucher (V), **dadurch gekennzeichnet, dass** das eine Ventil als Druckminderventil (19) und das andere als Druckbegrenzungsventil (21) ausgebildet ist.

9. Verwendung nach Anspruch 8, **dadurch gekennzeichnet, dass** der Verbraucher (V) aus einem pneumatischen Arbeitszylinder (51) gebildet ist, dessen beide in einem Zylindergehäuse (53) befindlichen Medienräume (55, 57) über eine Kolben-Startgeneinheit (59) voneinander getrennt sind und das sowohl das Druckminderventil (19) als auch das Druckbegrenzungsventil (21) an einen Arbeitsraum (55) des Arbeitszylinders (51) angeschlossen sind.

**Claims**

1. A pneumatic valve, in particular a pneumatic proportional pressure control valve that has a valve housing (3) in which a piston-like valve element (5) is guided in a guide (7) in an axially displaceable manner and, under the effect of an actuating device (9) for the valve element (5) and of a reset device (11), which exerts a spring force, and which acts on the valve element (5) counter to the applied magnetic force ($F_B$) of the actuating device (9), regulates a media flow at least between at least one first media connection (13) and a second media connection (15) on the valve housing (3), with the activation of the actuating device (9) the valve element (5) establishing a media-conveying connection (17) between the respective media connections (13, 15) while taking into account the prevailing forces on the basis of the applied pressures multiplied by the respective pressure-active surfaces, the spring force, the flow forces and the magnetic force, **characterised in that** the valve piston (23) of the valve element (5) is guided in the guide (7) of the valve housing (3) with a running tolerance so as to thus produce a pressure equalisation between the two media connections (13, 15) and the armature space (43), or that, in the case of a guide (7) of the valve piston (23) in the valve housing (43) that is designed to be airtight, the armature space (43) is maintained in the range of the ambient pressure with a pressure-tight design with respect to the surroundings, or **in that**, in the case of a valve piston (23) that is guided in the valve housing (3) in an air-tight manner, the armature space (43) is relieved to the ambient pressure by means of at least one venting duct (49).

2. The valve according to Claim 1, **characterised in that** if a higher pressure is present in one media connection (13, 15) as compared to a lower pressure in the other respective media connection (13, 15), the lower pressure is regulated by the implementation of a pressure-reducing valve (19) and **in that**, in the control of the respective higher pressure, the function of a pressure limitation valve (21) is achieved, preferably with one and the same valve design.

3. The valve according to Claim 1 or 2, **characterised in that** during operation of the valve (1) without activating the actuating device (9), the valve element (5) is held towards its closed position by the spring force ($F_o$) applied by the reset device (11) according to the following force formula, without taking friction into account,

$$p_1 \times A_1 - p_2 \times A_2 + p_2 \times A_3 - p_2 \times A_4 + F_0 = 0$$

where

      $p_1$ is the pressure at the first media connection (13),
      $p_2$ is the pressure at the second media connection (15),
      $A_1$ to $A_4$ are individual pressure-active surfaces on the piston-like valve element (5), and
      $F_o$ is the spring force of the reset device (11) on the valve element (5).

4. The valve according to any of the preceding claims, **characterised in that** the valve element (5) is formed by a valve piston (23) having a thickened cross section and which is guided in the guide (7) of the valve housing (3), which valve piston has a valve head (27) at its free face side (25), the cross section of which is widened as compared to the valve piston, said valve head protruding from the valve housing (3), with the first media connection (13) extending through the housing, and being connected to the valve piston (23) by means of a valve rod (29), and **in that** the valve is closed without current.

5. The valve according to any of the preceding claims, **characterised in that** the valve head (27) has a pressure-active surface (A1 and A2) on each of its two opposing face sides (31, 33) which are disposed in the region of the first media connection (13).

6. The valve according to any of the preceding claims, **characterised in that** the valve piston (23) has a pressure-active surface ($A_3$) on its face side (35) which faces the second media connection (15), said pressure-active surface being the same size as the pressure-active surface ($A_2$) on the valve head (27), and **in that** the valve piston (23) forms an additional pressure-active surface ($A_4$) on its other face side (37).

7. The valve according to any of the preceding claims, **characterised in that** the actuating device (9) is formed by an actuating magnet (35) having an armature (41) which is guided in an armature space (43) in a longitudinally displaceable manner and which is controlled by means of an energisable solenoid device (45) that moves the valve element (5) from the closed position into an opened position counter to the spring force (F$_o$) of at least one compression spring (47) of the reset device (11).

8. The use of at least two valves, each designed according to any of the preceding claims for controlling the pressure of a pneumatic medium for a consumer (V) connected to each of the valves (1), **characterised in that** the one valve is formed as a pressure-reducing valve (19) and the other valve is formed as a pressure limitation valve (21).

9. The use according to Claim 8, **characterised in that** the consumer (V) is formed by a pneumatic working cylinder (51), the two media chambers (55, 57) of which, which are both located in a cylinder housing (53), are separated from one another by means of a piston-rod unit (59), and **in that** both the pressure-reducing valve (19) and the pressure limitation valve (21) are connected to a working chamber (55) of the working cylinder (51).

**Revendications**

1. Vanne pneumatique, notamment vanne pneumatique proportionnelle de régulation de la pression, comprenant un corps (3) de vanne, dans lequel un élément (5) de vanne de type en piston est guidé dans un guidage (7) de manière à pouvoir se déplacer axialement et régule, sous l'effet d'un dispositif (9) d'actionnement de l'élément (5) de vanne et d'un dispositif (11) de rappel appliquant une force de ressort, qui s'applique à l'élément (5) de vanne à l'encontre de la force (F$_B$) magnétique appliquée par le dispositif (9) d'actionnement, un débit de fluide au moins entre au moins un premier raccord (13) pour le fluide et un deuxième raccord (15) pour le fluide du corps (3) de la vanne, dans laquelle, par la commande du dispositif (9) d'actionnement, l'élément (5) de vanne ménage une liaison (17) de conduite du fluide entre les raccords (13, 15) respectifs pour le fluide, en tenant compte des forces qui règnent sur la base des pressions appliquées multipliées par les surfaces respectives efficaces du point de vue de la pression, de la force du ressort, des forces du courant et de la force magnétique, **caractérisée en ce que** le piston (23) de la vanne de l'élément (5) de la vanne est guidé avec un jeu dans le guidage (7) du corps (3) de la vanne, pour produire ainsi une compensation de la pression entre les deux raccords (13, 15) pour le fluide et la chambre (43) d'armature ou **en ce que**, si le guidage (7) du piston (23) de la vanne dans le corps (3) de la vanne est conformé de manière étroite, la chambre (43) de l'armature est maintenue dans la plage de la pression de l'atmosphère ambiante, en étant constituée d'une manière étanche à la pression par rapport à l'atmosphère ambiante ou **en ce que**, si le piston (23) de la vanne est guidé de manière étroite dans le corps (3) de la vanne, la chambre (43) de l'armature est mise à la pression de l'atmosphère ambiante par au moins un canal (49) de mise à l'atmosphère.

2. Vanne suivant la revendication 1, **caractérisée en ce que**, dans la mesure où dans un raccord (13, 15) pour le fluide, s'applique une pression plus haute qu'une pression plus basse dans l'autre raccord (13, 15) pour du fluide, la pression la plus basse est régulée en réalisant une vanne (19) d'abaissement de la pression et **en ce que**, pour une régulation de la pression respectivement la plus haute, la fonction d'une vanne (21) de limitation de la pression est atteinte de préférence par un seul et même agencement de vanne.

3. Vanne suivant la revendication 1 ou 2, **caractérisée en ce que**, lorsque la vanne (1) fonctionne sans commande du dispositif (9) d'actionnement, l'élément (5) de vanne est maintenu, en négligeant le frottement, par la force (F$_0$) de ressort appliquée par le dispositif (11) de rappel dans la direction de sa position de fermeture, selon la formule de force suivante

$$p_1 \times A_1 - p_2 \times A_2 + p_2 \times A_3 - p_2 \times A_4 + F_0 = 0$$

dans laquelle

p$_1$ pression sur le premier raccord (13) pour du fluide,
p$_2$ pression sur le deuxième raccord (15) pour du fluide,
A$_1$ à A$_4$ surfaces individuelles efficaces du point de vue de la pression sur l'élément (5) de la vanne de type en piston et
F$_0$ force du ressort du dispositif (11) de rappel sur l'élément (5) de la vanne.

4. Vanne suivant l'une des revendications précédentes, **caractérisée en ce que** l'élément (5) de la vanne est formé d'un piston (23) de vanne, de section transversale épaissie, qui est guidé dans le guidage (7) du corps (3) de la vanne et qui a, à l'un de ses côtés (25) frontaux libres, une tête (27) de vanne élargie relativement en section transversale, qui, en passant dans le premier raccord (13) pour du fluide, fait saillie du corps (3) de la vanne et qui est reliée au piston (23) de la vanne par une tige (29) de vanne et **en ce que** la vanne est fermée sans courant électrique.

5. Vanne suivant l'une des revendications précédentes, **caractérisée en ce que** la tête (27) de la vanne a, sur ses deux côtés (31, 33) frontaux opposés, respectivement une surface (A1 et A2) efficace du point de vue de la pression, qui est disposée dans la zone du premier raccord (13) pour du fluide.

6. Vanne suivant l'une des revendications précédentes, **caractérisée en ce que** le piston (23) de la vanne a, sur son côté (35) frontal, tourné vers le deuxième raccord (15) pour du fluide, une surface ($A_3$) efficace du point de vue de la pression, qui est aussi grande que la surfacé ($A_2$) efficace du point de vue de la pression de la tête (27) de la vanne et **en ce que** le piston (23) de la vanne forme, sur son autre côté (37) frontal, une autre surface (A4) efficace du point de vue de la pression.

7. Vanne suivant l'une des revendications précédentes, **caractérisée en ce que** le dispositif (9) d'actionnement, formé d'un aimant (35) d'actionnement ayant une armature (41) magnétique, qui est guidée de manière à pouvoir se déplacer longitudinalement dans une chambre (43) d'armature et qui est commandée par un dispositif (45) à bobine alimenté en courant, fait passer, à l'encontre de la force ($F_0$) d'au moins un ressort (47) de compression du dispositif (11) de rappel, l''elément (5) de la vanne de la position de fermeture a une position ouverte.

8. Utilisation d'au moins deux vannes constituées respectivement suivant l'une des revendications précédentes, pour réguler la pression d'un fluide pneumatique pour un consommateur (V) raccordé respectivement aux vannes (1), **caractérisée en ce que** l'une des vannes est constituée en vanne (19) d'abaissement de la pression et l'autre en vanne (21) de limitation de la pression.

9. Utilisation suivant la revendication 8, **caractérisée en ce que** le consommateur (V) est formé d'un cylindre (51) de travail pneumatique, dont les deux chambres (55, 57), pour un fluide se trouvant dans l'enveloppe (53) du cylindre, sont séparées l'une de l'autre par une unité (59) piston-tige et **en ce qu'**à la fois la vanne (19) d'abaissement de la pression et la vanne (21) de limitation de la pression sont raccordées à une chambre (55) de travail du cylindre (51) de travail.

EP 2 702 460 B1

Fig.1

Fig.2

Fig.3

Fig.4

**EP 2 702 460 B1**

**IN DER BESCHREIBUNG AUFGEFÜHRTE DOKUMENTE**

**In der Beschreibung aufgeführte Patentdokumente**

- DE 102009010339 A1
- DE 3328418 A1